(19) Europäisches Patentamt

European Patent Office

Office européen des brevets

(11) **EP 4 527 198 A1**

## (12) EUROPEAN PATENT APPLICATION

(43) Date of publication:
26.03.2025 Bulletin 2025/13

(21) Application number: 23198878.3

(22) Date of filing: **21.09.2023**

(51) International Patent Classification (IPC):
*A01N 25/32* (2006.01)     *A01N 37/26* (2006.01)
*A01N 41/10* (2006.01)     *A01N 43/82* (2006.01)
*A01P 13/02* (2006.01)     *A01N 43/10* (2006.01)

(52) Cooperative Patent Classification (CPC):
(C-Sets available)
**A01N 43/82; A01N 43/10; A01P 13/02**     (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Adama Agan Ltd.
7710201 Ashdod (IL)**

(72) Inventors:
• **SPERLING, Shani
8532500 Beit Kama (IL)**
• **ESCRIBANO-VANACLOCHA, Juan A.
28002 Madrid (ES)**

(74) Representative: **Modiano, Gabriella Diana et al
Modiano & Partners SA
Steinsdorfstraße 14
80538 München (DE)**

## (54) NOVEL MIXTURES FOR CROP PROTECTION

(57) The present invention relates to mixtures comprising: i) a first herbicide selected from the group consisting of the Very Long-Chain Fatty Acid inhibitors, preferably dimethenamid, dimethenamid-P or flufenacet; and ii) a second and a third herbicide each independently selected from the group consisting of the Very Long-Chain Fatty Acid inhibitors, preferably dimethenamid, dimethenamid-P or flufenacet, the Acetolactate Synthase inhibitors, preferably thiencarbazone, and the Hydroxyphenyl Pyruvate Dioxygenase inhibitors, preferably mesotrione; provided that the first, second and third herbicides are different from each other. The invention further relates to formulations containing said mixtures and to a method for controlling weeds.

EP 4 527 198 A1

(52) Cooperative Patent Classification (CPC): (Cont.)

C-Sets
**A01N 43/82, A01N 43/10, A01N 41/10;**
**A01N 43/82, A01N 43/10, A01N 47/38**

**Description**

FIELD OF INVENTION

The present invention relates to mixtures of active ingredients comprising, a first herbicide and a second and third herbicides, and to methods of controlling weeds comprising applying said mixtures.

BACKGROUND OF INVENTION

The vulnerability of crops to weeds makes crop protection management one of the major components of the total crop production system. Various Insects and fungi along with the undesired weeds are very harmful to crop plants and can significantly reduce crop yields and qualities. herbicides alone or in combination help minimize this damage by controlling threats to the crop. Many active ingredients either of the same class or having mixtures of different classes are commercially available for these purposes.

Combinations of herbicides or mixtures of one or more herbicides with other active ingredients are typically used to broaden spectrum of control, to minimize the doses of chemicals used, to retard the development of resistance and to reduce the cost of the treatment through additive effect. Although many combinations of one herbicide agent with one or more active ingredients have been studied, a synergistic effect is rarely attained.

Practical agricultural experience has shown that the repeated and exclusive application of an individual active ingredient in the control of a single weed leads in many cases to a selection of those weeds which have developed natural or adapted resistance against the active compound in question. Effective control of these weeds with the active compound in question is then no longer possible.

Therefore, there is a need for active ingredients that help prevent or overcome resistance. To reduce the risk of weeds becoming resistant to certain active compounds, mixtures of different active ingredients are nowadays conventionally employed for controlling weeds. By combining judiciously active compounds having different mechanisms of action, it is possible to ensure successful control over a relatively long period of time.

Active agent mixtures are described in the literature. However, the control over the weeds does not always satisfy the needs of agriculture practice. Additionally, the efficacy of the control provided by these mixtures is not always satisfactory, or it can create additional toxicological and/or environmental effects. Random pesticidal formulations and mixtures do not exert a satisfactory controlling effect in most of the cases, and therefore, there is an urgent need for the development of new pesticidal mixtures having satisfactory controlling effects with more than one active ingredient.

It is an object of the present invention to provide mixtures and formulations of judiciously selected active ingredients which have improved activity against harmful weeds. It is an object of the present invention to provide mixtures and formulations that display a synergistic control of weeds.

SUMMARY OF THE INVENTION

It is an endeavor of the present invention to find mixtures comprising a first herbicide and a second and third herbicides that provide improved control of weeds. These improvements may come in the form of a synergistic efficacy among active ingredients. That is, allowing better control of weeds than it is possible with the individual compounds alone. Improvements can also overcome at least one of the challenges in the prior art, for example, by reducing the dosage rate or by enhancing the spectrum of activity or by combining knock-down activity with prolonged control or by facilitating resistance management.

Considering the above, it is an object of the present invention to provide mixtures of active ingredients that improve control of weeds.

It is an object of the present invention to provide a mixture comprising:

i) a first herbicide selected from the group consisting of the Very Long-Chain Fatty Acid inhibitors, preferably dimethenamid (e.g. dimethenamid-P) or flufenacet; and

ii) a second and a third herbicide each independently selected from the group consisting of the Very Long-Chain Fatty Acid inhibitors, preferably dimethenamid (e.g. dimethenamid-P) or flufenacet, the Acetolactate Synthase inhibitors, preferably thiencarbazone (e.g. thiencarbazone-methyl), and the Hydroxyphenyl Pyruvate Dioxygenase inhibitors, preferably mesotrione;

provided that the first, second and third herbicides are different from each other.

The first, the second and the third active ingredients can be in the form of a stereoisomer or and ester. For example, dimethenamid can be dimethenamid-P or thiencarbazone can be thiencarbazone-methyl. Thus, it is understood in the present application that when naming any active ingredient or family of active ingredients, all their stereoisomers and/or esters are included.

The present invention provides a combination, wherein the weight ratio of the first herbicide to the sum of the second herbicide and the third herbicide is typically from 1:20 to 20:1, for example from 1:1 to 10:1 or from 1:1 to 5:1, and the amount of each active ingredient is about 0.1-99 wt. %, about 0.1-95 wt. %, or about 0.1-90 wt. %, based on the total weight of the mixture composition.

The present invention provides a mixture comprising the first herbicide and the second and third herbicides, as mentioned above, wherein the application rates of the mixture according to the invention are from 1 g/ha to 1000 g/ha.

The present invention further provides a formulation comprising a mixture of the first herbicide and the second and third herbicides, as mentioned above, and further comprising at least one agriculturally acceptable additive, for example, at least one selected from the group consisting of a carrier, a surfactant, a solvent and combinations thereof.

The present invention further provides the use of the mixture or of the formulation comprising the first herbicide and the second and third herbicides for controlling weeds.

The present invention also provides a method for controlling weeds comprising contacting the weeds or their locus with an agriculturally effective amount of the mixture or the formulation according to the invention.

DETAILED DESCRIPTION OF THE PRESENT INVENTION

Definitions

Prior to setting forth the present subject matter in detail, it may be helpful to provide definitions of certain terms used herein. Unless defined otherwise, all technical and scientific terms used herein have the same meaning as is commonly understood by one of skill in the art to which this subject matter pertains.

As used herein, the term "active ingredient" includes, but is not limited to, herbicides, insecticides, and fungicides.

As used herein, the term "herbicide" refers to an active ingredient capable of controlling unwanted plants or weeds, for example when growing in the locus of the desired crop.

As used herein, the terms "control" or "controlling" are meant to include, but are not limited to, any killing, growth regulating, inhibiting or interfering with the normal life cycle of a weed.

As used herein, the term "effective" when used to describe a method for controlling, means that the method provides a good level of control of the undesired weeds without significantly interfering with the normal growth and development of the crop.

As used herein, the term "effective amount" when used in connection with an active ingredient or a combination of active ingredients refers to an amount thereof that, when ingested, contacted with or sensed, is sufficient to achieve a good level of control or activity without significantly interfering with the normal growth and significantly harming the crop.

As used herein, the term "effective amount" when used in connection with a non-active component, i.e. additive, such as a polymer or an organic carrier, refers to an amount of the additive that is sufficient to perform its function within the formulation.

As used herein, the term "agriculturally acceptable " means a substance which is known and accepted in the art for the formation of compositions for agricultural or horticultural use.

As used herein, the term "agriculturally acceptable inert additives" is defined as any substance that itself is not an active ingredient but is added to the formulation to improve its properties, such as stability, flowability, density, etc. Examples of such additives are carriers, solvents, pH modifiers (e.g. acids or bases), thickening agent, sticking agents, surfactants, antioxidation agent, anti-foaming agents and thickeners.

As used herein, the term "adjuvant" is broadly defined as any substance that itself is not an active ingredient, but which enhances or is intended to enhance the effectiveness of the pesticide with which it is used. Adjuvants may be understood to include, but are not limited to, spreading agents, penetrants, compatibility agents, and drift retardants. They are typically used to dilute ready mix formulations prior to application in the field, although some formulations include built-in adjuvants.

As used herein, the term "ready mix" or "ready mixture" means a formulation that may be applied to plants directly after dilution. The formulation comprises one or more active ingredients. The term "mixture" refers, but is not limited to, a combination in any physical form, e.g., blend, solution, alloy, or the like.

As used herein, the term "tank mix" refers to the mixture of two or more active ingredients or formulations that are mixed shortly before application. Tank mixtures can therefore be formed by mixing one or more formulations (each comprising one or more active ingredients) with water. Alternatively, as mentioned above, tank mixtures may comprise the mixture of one or more formulations (each comprising one or more active ingredients) with one or more adjuvants.

As used herein the term "plant" or "crop" includes reference to whole plants, plant organs (e.g. leaves, stems, twigs, roots, trunks, limbs, shoots, fruits etc.), plant cells, or plant seeds. This term also encompasses plant crops such as fruits. The term "plant" may also include the propagation material thereof, which may include all the generative parts of the plant such as seeds and vegetative plant material such as cuttings and tubers, which can be used for the multiplication of the plant. It may also include spores, corms, bulbs, rhizomes, sprouts basal shoots, stolons, and buds and other parts of plants, including seedlings and young plants, which are to be transplanted after germination or after emergence from soil.

As used herein, the term "locus" includes the habitat, breeding ground, plant, propagation material, soil, area, material or environment in which a pest is growing or may grow.

As used herein, the term "genetically modified plants", broadly known also as "genetically modified organism" or "GMO", includes plants the DNA of which has been modified using genetic engineering methods, such as recombinant DNA techniques. Typically, one or more genes have been integrated into the genetic material of such a plant to improve certain properties of the plant.

As used herein, the term "herbicide-resistant" or "herbicide resistant" refers to an individual plant of a crop or a weed that survives a herbicide application that would kill a normal population of the same species. Such resistance can be naturally acquired or introduced through genetic engineering methods.

As used herein, the term "herbicide-tolerant" or "herbicide tolerant" refers to crops or weeds that survive and reproduce after herbicide treatment at a normal use rate. Such tolerance can be naturally acquired or introduced through genetic engineering methods.

The term "a" or "an" as used herein includes the singular and the plural, unless specifically stated otherwise. Therefore, the terms "a," "an" or "at least one" can be used interchangeably in this application.

Throughout the application, descriptions of various embodiments use the term "comprising"; however, it will be understood by one of skill in the art, that in some specific instances, an embodiment can alternatively be described using the language "consisting essentially of" or "consisting of".

As used herein the term "ha" refers to hectare.

As used herein, the term "g" refers to gram, and "L" or "l" refers to litre.

As used herein, the term "more effective" includes, but is not limited to, increasing efficacy of the pesticidal control, prolonging protection and reducing the amount of time needed to achieve a given level of pesticidal control, prolonging the duration of protection against weeds attack after application and extending the protection period against weeds attack and/or reducing the amount of time needed to achieve a level of weeds control compared to when each pesticide at the same amount is applied alone.

As used herein, the term "surfactant" means an agriculturally acceptable material which imparts emulsifiability, stability, spreading, wetting, dispersibility or other surface-modifying properties. Examples of suitable surfactants include non-ionic, anionic, cationic and ampholytic surfactants.

For purposes of better understanding the present teachings and in no way limiting the scope of the teachings, unless indicated to the contrary, the numerical parameters set forth in the following specification and attached claims are approximations that may vary depending upon the desired properties sought to be obtained. At the very least, each numerical parameter should at least be construed in light of the number of reported significant digits and by applying ordinary rounding techniques. In this regard, use of the term "about" herein specifically includes $\pm 10\%$ from the indicated values in the range. In addition, the endpoints of all ranges directed to the same component or property herein are inclusive of the endpoints, are independently combinable, and include all intermediate points and ranges.

Unless otherwise specified, references to percentages of a component present in a combination are by weight (wt.) percentages of the component with respect to the total weight of the combination.

It is further understood that where a parameter range is provided, all integers within that range, and tenths thereof, are also provided by the subject matter. For example, "0.1% to 50%" includes 0.1 %, 0.2 %, 0.3 %, 0.4 % etc. up to 50 %.

When a ratio herein is to be "X:1 or higher", it is meant that the ratio is Y:1, where Y is X or greater, and when a ratio is herein to be "X:1 or lower", it is meant that the ratio is Z:1, where Z is X or less. The same logic follows for ratios that are "1:X or higher" and "1:X or lower".

Pesticidal Mixtures

It has been surprisingly found that by combining the first herbicide and the second and third herbicides, mixtures are produced that exhibit a broad spectrum of control and high efficacy against a very wide range of weeds. The mixtures and compositions of the present invention are based in part on the finding that application of the mixture of the present invention to a locus or area where weeds control is desired results in improved control thereof.

The combination described herein typically provides a higher herbicidal activity than that the sum of the activities of each of the herbicide when applied at the same rate. Such a combination allows the reduced dosages of the individual herbicides which can damage agriculturally important plants.

The first herbicide is a Very Long-Chain Fatty Acid inhibitor that can be selected from the group consisting of alpha-chloroacetamides, alpha-thioacetamides, alpha-oxyacetamides, oxiranes, isoxazolines, azolyl-carboxamides, bexofuranes and thiocarbamates. The first herbicide can be an alpha-chloroacetamide selected from the group consisting of dimethenamid, acetochlor, butachlor, metolachlor, S-metolachlor, pretilachlor, thenylchlor, alachlor, dimethachlor, metazachlor, pethoxamid, propachlor and propisochlor, preferably dimethenamid, including dimethenamid-P, and/or any ester or stereoisomer thereof.

The second herbicide can also be a Very Long-Chain Fatty Acid inhibitor, different from the first herbicide for example, an alpha-oxyacetamide selected from the group consisting of flufenacet and mefenacet, preferably flufenacet, and/or any ester or stereoisomer thereof.

Therefore, in an embodiment of the application said first herbicide can be dimethenamid (or dimethenamid-P) and the second herbicide flufenacet.

The third herbicide can be an Acetolactate Synthase inhibitor, for example, a triazolinone selected from the group consisting of thiencarbazone, propoxycarbazone and flucarbazone, or any ester and/or stereoisomer thereof. Thus, for example, said first herbicide can be dimethenamid (or dimethenamid-P), the second herbicide can be flufenacet and the third herbicide can be thiencarbazone (or thiencarbazone-methyl).

Alternatively, the third herbicide can be a Hydroxyphenyl Pyruvate Dioxygenase inhibitor, for example a triketone selected from the group consisting of fenquinotrione, benzobicyclon, tembotrione, bicyclopyrone, mesotrione, tefuryltrione and sulcotrione, preferably mesotrione, or any ester or stereoisomer thereof. Thus, the mixture of the invention may comprise first herbicide that is dimethenamid (or dimethenamid-P), the second herbicide that is flufenacet and the third herbicide that is mesotrione.

Alternatively, the second herbicide can be an Acetolactate Synthase inhibitor and the third herbicide can be a Hydroxyphenyl Pyruvate Dioxygenase inhibitor. An example of this alternative embodiment is a mixture wherein said first herbicide is dimethenamid (or dimethenamid-P), the second herbicide is thiencarbazone (or thiencarbazone-methyl) and the third herbicide is mesotrione.

Commonly available safeners which may be usefully employed, individually or in any combination found to be useful, with the inventive combinations may include but are in no way limited to Daimuron (Dymron), Cumyluron, Dimepiperate, Fenclorim, Cloquintocet, (Cloquintocet-mexyl), Fenchlorazole-ethyl, Mefenpyr (Mefenpyr-diethyl), Isoxadifen (Isoxadifenethyl), Cyprosulfamide, Dietholate, Benoxacor, BPCMS, Cyometrinil, Dichlormid, Dicyclonon, Dietholate, fenchlorazole, Flurazole, Fluxofenim, Furilazole, Jiecaowan, Jiecaoxi, Mephenate, Metcamifen, Naphthalic anhydride, or Oxabetrinil. For example, the safener can be cyprosulfamide. Those skilled in the relevant field of art will immediately be aware of further safeners that may be employed without departing from the scope of the mixture of the invention disclosed herein. Combinations of safeners can be employed in the methods and mixtures disclosed herein.

Application

In an embodiment, the mixture of the present invention may be applied pre-sowing or post-sowing, pre-emergence, early-post-emergence, or post-emergence of the crop. The mixture may be applied via in furrow spray, foliar application, broadcast, basal application, soil application, soil incorporation or soil injection.

For example, the mixture can be applied in non-crop areas which include but are not limited to, commercial areas, residential areas, lawns, ornamental plants, shrubs, trees, parks, livestock areas, warehouses, food storage facilities, grain bins, turfgrass, pastures, grasslands, rangelands, fallow land, rights-of-way, golf courses, parks, along roadsides, power-lines, pipelines, railways, forests, well sites, and equipment yards.

The mixture of the invention can be added to a broad range of crops, for example, barley, rice, corn, sorghum and wheat.

The plants include cultivated plants which tolerate the action of herbicides, fungicides or insecticides as a result of breeding and/or genetically engineered methods.

The weeds that can be treated with the mixture of the invention are grass weeds and dicotyledonous weed.

The weeds that can be treated with the mixture of the invention can be a Poacea, a Cyperacea a Amaranthaceae, a Malvacea, a Asteracea, a Chenopodiacea, a Solanaceae, a Euphorbiacea, a Polygonacea, a Portulacacea, a Caryophyllacea, a Brassicacea, a Violacea and a Geraniacea. For example, weeds could be Digitaria ssp, Echinochloa ssp., Setaria ssp., Eriochloa ssp., Sorghum ssp., Lolium ssp, Panicum ssp., Poa ssp., Agropyron ssp., Cyperus ssp., Amaranthus ssp., Abutilon ssp, Hibiscup sp, Ambrosia ssp, Matricaria ssp, Cirsium ssp, Xanthium ssp, Chenopodium ssp., Datura ssp., Solanum ssp., Mercurialis ssp., Fallopia ssp., Polygonum ssp, Portulaca ssp., Stellaria ssp., Thlaspi ssp, Viola ssp., and Geranium ssp.

The ratio of application of the mixture of the invention varies depending upon various conditions such as the type of formulation, weather conditions, the type of crop, the desired effect, and the type of weeds. For example, the application rates of the mixture comprising the first herbicide and the second and third herbicides are from 1 g ai/ha to 1000 gai/ha, for example from 500 g ai/ha to 1000 g ai/ha or from 1 g ai/ha to 500 g ai/ha.

Formulations

Thus, for example, the first herbicide and the second and third herbicides can be applied as a single "ready-for-use" form, or in a combined spray mixture composed from separate formulations of each single active ingredient, such as a "tank-mix" form. It is preferred that the mixture of the first herbicide and the second and third herbicides is in the form of a ready-for-use formulation (ready-mix formulation). This ready-mix formulation can be obtained by combining the active ingredients in an effective amount with an agriculturally acceptable carrier, a surfactant or other application-promoting adjuvant customarily employed in formulation technology.

The mixture of the invention may comprise at least one additional component selected from the group of surfactants, solid diluents and liquid diluents. Such compositions can be formulated using agriculturally acceptable carriers, surfactants or other application-promoting adjuvants customarily employed in formulation technology and formulation techniques that are known in the art.

Examples of suitable solid carriers potentially useful in the present compositions include but are not limited to mineral earths such as silica gels, silicates, talc, kaolin, sericite, attaclay, limestone, bentonite, lime, chalk, bole, mirabilite, loess, clay, dolomite, zeolite, diatomaceous earth, calcium carbonate, calcium sulfate, magnesium sulfate, magnesium oxide, sodium carbonate and bicarbonate, and sodium sulfate; ground synthetic materials; fertilizers such as ammonium sulfate, ammonium phosphate, ammonium nitrate, ureas, and products of vegetable origin, such as cereal meal, tree bark meal, wood meal, and nutshell meal; cellulose powders; and other solid carriers.

Examples of suitable liquid carriers potentially useful in the present compositions include but are not limited to water; aromatic hydrocarbons such as alkylbenzenes and alkylnaphthalenes; alcohols such as cyclohexanol, and decanol; ethylene glycol; polypropylene glycol; dipropylene glycol; N,N-dimethylformamide; dimethylsulfoxide; dimethylacetamide; N-alkylpyrrolidones such as N-methyl-2-pyrrolidone; paraffins; various oils such as olive, castor, linseed, tung, sesame, corn, peanut, cotton-seed, soybean, rape-seed, or coconut oil; fatty acid esters; ketones such as cyclohexanone, 2-heptanone, isophorone, and 4-hydroxy-4-methyl-2-pentanone; and the like.

The present composition may be employed or prepared in any conventional form, for example, as wettable powders (WP), emulsion concentrates (EC), microemulsion concentrates (MEC), water-soluble powders (SP), water-soluble concentrates (SL), suspoemulsion (SE), oil dispersions (OD), concentrated emulsions (BW) such as oil-in-water and water-in-oil emulsions, sprayable solutions or emulsions, capsule suspensions (CS), suspension concentrates (SC), suspension concentrates, dusts (DP), oil-miscible solutions (OL), seed-dressing products, granules (GR) in the form of microgranules, spray granules, coated granules and absorption granules, granules for soil application or broadcasting, water-soluble granules (SG), water-dispersible granules (WDG), ULV formulations, microcapsules or waxes. These individual formulation types are known in the art.

Examples of suitable surfactants include, but are not limited to, non-ionic, anionic, cationic and ampholytic types such as alkoxylated fatty alcohols, ethoxylated polysorbate (e.g. tween 20), ethoxylated castor oil, lignin sulfonates, fatty acid sulfonates (e.g. lauryl sulfonate), phosphate esters such as phosphate esters of alcohol alkoxylates, phosphate esters of alkylphenol alkoxylates and phosphate esters of styrylphenol ethoxylates, condensates of sulfonated naphthalene and naphthalene derivatives with formaldehyde, condensates of naphthalene or of naphthalenesulfonic acid with phenol and formaldehyde, alkylarylsulfonates, ethoxylated alkylphenols and aryl phenols, polyalkylene glycols, sorbitol esters, alkali metal, sodium salts of lignosulphonates, tristyrylphenol ethoxylate phosphate esters, aliphatic alcohol ethoxylates, alkylphenol ethoxylates, ethylene oxide/propylene oxide block copolymers, graft copolymers and polyvinyl alcohol-vinyl acetate copolymers. Other surfactants known in the art may be used as desired.

Other ingredients, such as wetting agents, anti-foaming, adhesives, neutralizers, thickeners, binders, sequestrates, fertilizers, biocides, stabilizers, buffers or anti-freeze agents, may also be added to the present compositions in order to increase the stability, density, and viscosity of the described compositions.

Aqueous use forms can be prepared from emulsion concentrates, suspensions, pastes, wettable powders or water-dispersible granules by adding water. To prepare emulsions, pastes or oil dispersions, the components of the compositions either as such or dissolved in an oil or solvent, can be homogenized in water by means of a wetting agent, tackifier, dispersant or emulsifier. Alternatively, it is also possible to prepare concentrates comprising active ingredient, wetting agent, tackifier, dispersant or emulsifier and, if desired, a solvent or oil, which are suitable for dilution with water.

Typically, the concentration of active ingredients in the formulation is about 0.1-99 wt. %, about 0.1-95 wt. %, or about 0.1-90 wt. %, based on the total weight of the formulation. For example, the concentration of active ingredients in the formulation is about 1-70 wt. %, based on the total weight of the formulation, for example about 1-50 wt. %, or about 1-40 wt. %, or about 1-30 wt. % or about 1-20 wt. %, based on the total weight of the composition. For example, it is possible that the concentration of active ingredients in the formulation is about 1-10 wt. %, based on the total weight of the formulation. Thus, for example, the concentration of active ingredients in the formulation can be from about 0.1%, 0.5%, 1%, 1.5%, 2%, 2.5%, 3%, 3.5%, 4%, 4.5%, 5% to about 90%, 93%, 95%, 98%, 99% based on the total weight of the formulation. The remaining components in the formulation are for example the carrier and additives.

Alternatively, the present invention provides a kit comprising the first herbicide and the second and third herbicides. Such kits may comprise, in addition to the aforementioned active components, one or more additional active ingredients, either within the provided pesticidal composition or separately.

METHOD OF USE

The present invention provides a method for control of weeds by contacting the weed or their locus with an effective amount of the any one of the mixtures or the compositions disclosed herein so as to thereby control the weeds.
The following representative examples illustrate the practice of the present invention in some of its embodiments but should not be construed as limiting the scope of the invention. Other embodiments will be apparent to one skilled in the art from consideration of the specification and examples.

REPRESENTATIVE EXAMPLES

A synergistic effect exists whenever the action of an active ingredient combination is greater than the sum of the actions of the individual components. In the field of agriculture, it is often understood that the term "synergy" is as defined by Colby S. R. in an article entitled "Calculation of the synergistic and antagonistic responses of herbicide combinations" published in the journal Weeds, 1967, 15, p. 20-22. The action expected for a given combination of two active components can be calculated according to Colby as follows:

$$E = A + B - AB/100$$

in which E represents the expected effect, e.g. percentage of pest control, for the combination of the active ingredients at defined doses (for example equal to x and y respectively), A is the effect, e.g. percentage of pest control, observed for the first compound or mixture of compounds at a defined dose (equal to x), B is the effect, e.g. percentage of pest control, observed for the second compound or group of compounds at a defined dose (equal to y).
Here, efficacy or percent inhibition is determined in %. 0% means efficacy that corresponds to the Control, i.e., as if no treatment had been applied. A percent inhibition of 100% means that complete control is observed. When the percent control observed for the combination (E0) is greater than E, there is a synergistic effect. When the percent control observed for the combination (E0) is equal to E, there is an additive effect and wherein the percent control observed for the combination (E0) is lower than E, there is an antagonistic effect.

**Example 1: Pot trial with Flufenacet+Dimethenamid-p+Thiencarbazone**

**First trial:** Tank mixes were prepared by combining the formulation with water in order to achieve the desired concentration of each active ingredient, as outlined in Table 1. For this study, individual pots were utilized for sowing the weeds, with each pot containing one weed species, in this case SETVE (Setaria verticillate) or ECHCG (Echinochloa crus-galli). Treatments were then applied to each pot at the pre-emergence stage of the weeds, ensuring consistent application timing across all treatments. Subsequently, a comprehensive assessment was conducted eight days after application (8DAA) to evaluate the efficacy of each treatment on both SETVE and ECHCG weed species. The results obtained from this evaluation are summarized in Table 1.

Table 1: Trial treatments

| Treat # | Formulation | Flufenacet ga.i. hectare | TCM ga.i. hectare | DMTP ga.i. hectare | 8DAA SETVE % | 8DAA ECHCG% |
|---|---|---|---|---|---|---|
| 1 | Flufenacet 568 SC | 12.2 | | | 0 | 0 |
| 2 | TCM 15 + DMTP 250 | | 3 | 50 | 65 | 60 |
| 3 | Flufenacet568 SC+TCM15+ DMTP 250 | 12.5 | 3 | 50 | 80 | 75 |

We wanted to test whether mixing Flufenacet and Dimethenamid-p and Thiencarbazone would produce a greater effect than the sum of each individual active ingredient. To do this, we used Colby's equation. If the observed value of the mixture was greater than the expected value, we could conclude that the two chemicals had a synergistic effect when combined.
The efficacy of Flufenacet on SETVE and ECHCG was 0%, while the efficacy of Dimethenamid-p and Thiencarbazone on SETVE and ECHCG 65% and 60%, respectively. When we mixed Flufenacet and Dimethenamid-p and Thiencarbazone in a tank, we observed an efficacy of 80% and 75%, respectively. The expected (E) of the mix calculated to be 65% and 60%, respectively (Calculation in Table 2).

Table 2: Colby calculation

|  | 8DAA SETVE % | 8DAA ECHCG% |
|---|---|---|
| A (Flufenacet) | 0 | 0 |
| B (Dimethenamid-p and Thiencarbazone) | 65 | 60 |
| AB (Obs) | 80 | 75 |
|  |  |  |
| E=(A+B) -(A*B)/100 | 65 | 60 |
| R = E/EO | 1.23 | 1.25 |

The results clearly demonstrate that when Flufenacet and Dimethenamid-p and Thiencarbazone are mixed in a tank (treatment 3, table 1), they provide synergistic control over grass weeds (such as SETVE and ECHCG and other).

Second trial: Tank mixes were prepared by combining the formulation with water in order to achieve the desired concentration of each active ingredient, as outlined in Table 3. For this study, individual pots were utilized for sowing the weeds, with each pot containing ECHCG (Echinochloa crus-galli). Treatments were then applied to each pot at the post-emergence stage of the weeds (2-3 leaves), ensuring consistent application timing across all treatments. Subsequently, a comprehensive assessment was conducted eight days after application (8DAA) to evaluate the efficacy of each treatment on ECHCG weed species. The results obtained from this evaluation are summarized in Table 3.

Table 3: Trial treatments

| Treat # | Formulation | Flufenacet ga.i. hectare | TCM ga.i. hectare | DMTP ga.i. hectare |
|---|---|---|---|---|
| 1 | Flufenacet 568 SC | 12.2 |  |  |
| 2 | TCM 15+DMTP250 |  | 3 | 50 |
| 3 | Flufenacet568 SC+TCM15+ DMTP 250 | 12.5 | 3 | 50 |

We wanted to test whether mixing Flufenacet and Dimethenamid-p and Thiencarbazone would produce a greater effect than the sum of each individual active ingredient. To do this, we used Colby's equation. If the observed value of the mixture was greater than the expected value, we could conclude that the two chemicals had a synergistic effect when combined.

The efficacy of Flufenacet on ECHCG was 0%, while the efficacy of Dimethenamid-p and Thiencarbazone on ECHCG 40%. When we mixed Flufenacet and Dimethenamid-p and Thiencarbazone in a tank, we observed an efficacy of 55%. The expected (E) of the mix calculated to be 40% (Calculation in Table 4).

Table 4: Colby calculation

|  | 8DAA ECHCG% |
|---|---|
| A (Flufenacet) | 0 |
| B (Dimethenamid-p and Thiencarbazone) | 40 |
| AB (Obs) | 55 |
|  |  |
| E=(A+B) -(A*B)/100 | 40 |
| R = E/EO | 1.38 |

The results clearly demonstrate that when Flufenacet and Dimethenamid-p and Thiencarbazone are mixed in a tank (treatment 3, table 3), they provide synergistic control over grass weeds (such as ECHCG and other), as compared to using either active ingredient alone (treatments 1 or 2, table 3).

Third trial: Tank mixes were prepared by combining the formulation with water in order to achieve the desired concentration of each active ingredient, as outlined in Table 5. For this study, individual pots were utilized for sowing the weeds, with each pot containing one weed species: AMARE (Amaranthus retroflexus) or CHEAL (Chenopodium album). Treatments were then applied to each pot at the post-emergence stage (2-3 leaves) of the weeds, ensuring consistent application timing across all treatments. Subsequently, a comprehensive assessment was conducted eight days after application to evaluate the efficacy of each treatment on AMARE and CHEAL weed species. The results obtained from this evaluation are summarized in Table 5.

Table 5: Trial treatments

| Treat # | Formulation | Flufenacet ga.i. hectare | TCM ga.i. hectare | DMTP ga.i. hectare |
|---|---|---|---|---|
| 1 | Flufenacet 568 SC | 75 | | |
| 2 | TCM 15 + DMTP 250 | | 18 | 302 |
| 3 | Flufenacet568 SC+TCM15+DMTP 250 | 75 | 18 | 302 |

We wanted to test whether mixing Flufenacet and Dimethenamid-p and Thiencarbazone would produce a greater effect than the sum of each individual active ingredient. To do this, we used Colby's equation. If the observed value of the mixture was greater than the expected value, we could conclude that the two chemicals had a synergistic effect when combined.

The efficacy of Flufenacet on AMARE and CHEAL was 0%, while the efficacy of Dimethenamid-p and Thiencarbazone on AMARE and CHEAL 15% and 35%, respectively. When we mixed Flufenacet and Dimethenamid-p and Thiencarbazone in a tank, we observed an efficacy of 35% and 70% respectively. The expected (E) of the mix calculated to be 15% and 35% respectively (Calculation in Table 6).

Table 6: Colby calculation

| | 8DAA AMARE % | 8DAA CHEAL% |
|---|---|---|
| A (Flufenacet) | 0 | 0 |
| B (Dimethenamid-p and Thiencarbazone) | 15 | 35 |
| AB (Obs) | 35 | 70 |
| | | |
| E=(A+B) -(A*B)/100 | 15 | 35 |
| R = E/EO | 2.33 | 2.00 |

The results clearly demonstrate that when Flufenacet and Dimethenamid-p and Thiencarbazone are mixed in a tank (treatment 3, table 5), they provide synergistic control over broad leaf weeds (such as AMARE and CHEAL and other.

### Example 2: Pot trial with Flufenacet+Dimethenamid-p+Mesotrione

Tank mixes were prepared by combining the formulation with water in order to achieve the desired concentration of each active ingredient, as outlined in Table 7. For this study, individual pots were utilized for sowing the weeds, with each pot containing one weed species: ECHCG (Echinochloa crus-galli) or AMARE (Amaranthus retroflexus). Treatments were then applied to each pot at the post-emergence stage (2-3 leaves) of the weeds, ensuring consistent application timing across all treatments. Subsequently, a comprehensive assessment was conducted eight days after application (8DAA) to evaluate the efficacy of each treatment on ECHCG and AMARE weed species. The results obtained from this evaluation are summarized in Table 7.

Table 7: Trial treatments

| Treat # | Formulation | Flufenacet ga.i. hectare | MST ga.i. hectare | DMTP ga.i. hectare |
|---|---|---|---|---|
| 1 | Flufenacet 568 SC | 75 | | |
| 2 | DMT500 +MST100 SE | | 60 | 302 |

(continued)

| Treat # | Formulation | Flufenacet ga.i. hectare | MST ga.i. hectare | DMTP ga.i. hectare |
|---|---|---|---|---|
| 3 | Flufenacet568 SC+DMT500+ MST100SE | 75 | 60 | 302 |

We wanted to test whether mixing Flufenacet and Dimethenamid-p and Mesotrione would produce a greater effect than the sum of each individual active ingredient. To do this, we used Colby's equation. If the observed value of the mixture was greater than the expected value, we could conclude that the two chemicals had a synergistic effect when combined.

The efficacy of Flufenacet on ECHCG and AMARE was 0% both weeds, while the efficacy of Dimethenamid-p and Mesotrione on ECHCG and AMARE 30% and 10% respectively. When we mixed Flufenacet and Dimethenamid-p and Mesotrione in a tank, we observed an efficacy of 40% and 15% respectively. The expected (E) of the mix calculated to be 30% and 10% respectively (Calculation in Table 8).

Table 8: Colby calculation

| | 8DAA ECHCG % | 8DAA AMARE % |
|---|---|---|
| A (Flufenacet) | 0 | 0 |
| B (Dimethenamid-p and Mesotrione) | 30 | 10 |
| AB (Obs) | 40 | 15 |
| | | |
| E=(A+B) -(A*B)/100 | 30 | 10 |
| R = E/EO | 1.33 | 1.50 |

The results clearly demonstrate that when Flufenacet and Dimethenamid-p and Mesotrione are mixed in a tank (treatment 3, table 7), they provide synergistic control over grass and broad leaf weeds (such as ECHCG and AMARE and other), as compared to using either active ingredient alone (treatments 1 or 2, table 7).

While the present disclosure of the invention may be susceptible to various modifications and alternative forms, specific embodiments have been described by way of example in detail herein. However, it is understood that the present disclosure is not intended to be limited to the particular forms disclosed. Rather, the present disclosure is to cover all modifications, equivalents, and alternatives falling within the scope of the present disclosure as defined by the following claims and their legal equivalents.

**Claims**

1. A mixture comprising:

   i) a first herbicide selected from the group consisting of the Very Long-Chain Fatty Acid inhibitors, preferably dimethenamid, dimethenamid-P or flufenacet; and
   ii) a second and a third herbicide each independently selected from the group consisting of the Very Long-Chain Fatty Acid inhibitors, preferably dimethenamid, dimethenamid-P or flufenacet, the Acetolactate Synthase inhibitors, preferably thiencarbazone, and the Hydroxyphenyl Pyruvate Dioxygenase inhibitors, preferably mesotrione;

   provided that the first, second and third herbicides are different from each other.

2. The mixture according to claim 1, wherein said first herbicide is dimethenamid or dimethenamid-P.

3. The mixture according to any of the previous claims, wherein the second herbicide is a Very Long-Chain Fatty Acid inhibitor.

4. The mixture according to any of the previous claims, wherein the said first herbicide is dimethenamid or dimethenamid-P, and the second herbicide is flufenacet.

5.  The mixture according to any of the previous claims, wherein the third herbicide is an Acetolactate Synthase inhibitor.

6.  The mixture according to any of the previous claims, wherein the Acetolactate Synthase inhibitor is a triazolinone selected from the group consisting of thiencarbazone, propoxycarbazone and flucarbazone.

7.  The mixture according to any of the previous claims, wherein the said first herbicide is dimethenamid or dimethenamid-P, the second herbicide is flufenacet and the third herbicide is thiencarbazone.

8.  The mixture according to any of claims 1 to 4, wherein the third herbicide is a Hydroxyphenyl Pyruvate Dioxygenase inhibitor.

9.  The mixture according to claim 8, wherein the said first herbicide is dimethenamid, the second herbicide is flufenacet and the third herbicide is mesotrione.

10. The mixture according to any of claims 1 or 2, wherein the second herbicide is an Acetolactate Synthase inhibitor and the third herbicide is a Hydroxyphenyl Pyruvate Dioxygenase inhibitor.

11. The mixture according to claim 10, wherein the said first herbicide is dimethenamid or dimethenamid-P, the second herbicide is thiencarbazone and the third herbicide is mesotrione.

12. An agrochemical formulation comprising:

    a) the mixture as defined in any of claims 1-11; and
    b) an agriculturally acceptable carrier.

13. The agrochemical composition of claim 12, further comprising at least one surfactant, solid diluent, liquid diluent, or a combination thereof.

14. A method for controlling weeds comprising contacting the weeds or their *locus* with an agriculturally effective amount of the mixture as defined in any of claims 1-11 or the formulation as defined in any of claim 12 or 13.

15. Use of the mixture as defined in any of claims 1-11 for controlling weeds.

Europäisches
Patentamt

European
Patent Office

Office européen
des brevets

# EUROPEAN SEARCH REPORT

**Application Number**

**EP 23 19 8878**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 107 873 722 A (SHAANXI SUNGER ROAD BIO SCI CO) 6 April 2018 (2018-04-06) | 1,5,8, 10,12-15 | INV. A01N25/32 A01N37/26 |
| Y | * claim 1 * * page 3, paragraph 5 * * page 5, paragraph 19 * * formulation examples; page 8, paragraph 26 - page 9, paragraph 37 * * biological example 1; page 9, paragraph 38 - paragraph 39 * * page 9, paragraph 41 - page 10; table 6 * | 1-15 | A01N41/10 A01N43/82 A01P13/02 A01N43/10 |
| X | CN 106 922 719 A (ZHEJIANG TIANFENG BIOLOGICAL SCIENCE CO LTD) 7 July 2017 (2017-07-07) | 1,5,8, 10,12-15 | |
| Y | * claims 1-3 * * page 3, paragraph 7 - page 4 * * page 4, paragraph 9 * * page 5, paragraph 23 - paragraph 30; examples 1-4 * * page 6, paragraph 56 - page 8, paragraph 64; tables 2-3 * | 1-15 | |
| Y | CN 103 478 159 A (UNITED LINONG TECHNOLOGY CO LTD) 1 January 2014 (2014-01-01) * claim 1 * * page 11, paragraph 126 - paragraph 129; table 2 * * page 8, paragraph 74 - page 11, paragraph 123; examples 2-26 * | 1-15 | |
| X | EP 3 603 395 A1 (BASF SE [DE]) 5 February 2020 (2020-02-05) * claims 1,10 * * page 21, paragraph 45 - page 49; table S * * page 14, paragraph 33 - page 15 * | 1,2,5,8, 10,12-15 | |

**TECHNICAL FIELDS SEARCHED (IPC)**

A01N
A01P

-/--

The present search report has been drawn up for all claims

| Place of search | Date of completion of the search | Examiner |
|---|---|---|
| Munich | 18 January 2024 | Größl, Sylvester |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...........................................................................

& : member of the same patent family, corresponding
document

EPO FORM 1503 03.82 (P04C01)

# EUROPEAN SEARCH REPORT

**Application Number**

EP 23 19 8878

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 797 418 B1 (ISHIHARA SANGYO KAISHA [JP]) 10 May 2017 (2017-05-10) | 1,5,8, 10,12-15 | |
| Y | * claim 1 * <br> * page 4, paragraph 19 * <br> * page 5, paragraph 28 * <br> * page 10, paragraph 37 - page 12, paragraph 43; tables 1-4 * | 1-15 | |
| X | EP 2 856 873 A1 (ISHIHARA SANGYO KAISHA [JP]) 8 April 2015 (2015-04-08) | 1,2,5,8, 10,12-15 | |
| Y | * claims 1,3-4,6-9 * <br> * page 3, paragraph 17 - paragraph 20 * <br> * page 5, paragraph 27 * <br> * page 6, paragraph 35 - page 7 * <br> * page 7, paragraph 37 - page 9, paragraph 46; examples 1-4; tables 1-4 * | 1-15 | |
| X | CN 104 970 029 A (HENAN VISION TECHNOLOGY CO LTD) 14 October 2015 (2015-10-14) | 1,5,8, 10,12-15 | |
| Y | * claim 1 * <br> * page 6, paragraph 39 * <br> * page 6, paragraph 41 - page 8, paragraph 70; examples 1-15 * <br> * page 9, paragraph 81 - page 10, paragraph 87; tables 1-2 * | 1-15 | **TECHNICAL FIELDS SEARCHED (IPC)** |
| X | CN 106 879 608 A (ZHEJIANG TIANFENG BIOLOGICAL SCIENCE CO LTD) 23 June 2017 (2017-06-23) | 1,5,8, 10,12-15 | |
| Y | * claims 1,6 * <br> * page 6, paragraph 44 - page 7, paragraph 47; table 2 * <br> * formulation examples 1-6; page 5, paragraph 28 - page 6, paragraph 39 * | 1-15 | |

-/--

The present search report has been drawn up for all claims

| Place of search | Date of completion of the search | Examiner |
|---|---|---|
| Munich | 18 January 2024 | Größl, Sylvester |

Europäisches
Patentamt

European
Patent Office

Office européen
des brevets

# EUROPEAN SEARCH REPORT

Application Number

EP 23 19 8878

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WANG GUANG-XI ET AL: "Response of a Sulfonylurea (SU)-Resistant Biotype of Limnophila sessiliflora to Selected SU and Alternative Herbicides", PESTICIDE BIOCHEMISTRY AND PHYSIOLOGY, vol. 68, no. 2, 1 October 2000 (2000-10-01), pages 59-66, XP093119523, US ISSN: 0048-3575, DOI: 10.1006/pest.2000.2504 | 1,5,8, 10,12-15 | |
| Y | * chapter "greehouse studies"; page 60 * * chapter "field experiment"; page 61 * * entry 4; page 62; table 3 * * chapter "field experiment"; page 62 * | 1-15 | |
| Y | WO 02/21922 A1 (AVENTIS CROPSCIENCE SA [FR]; PALLETT KEN [DE]; SLATER ASHLEY [GB]) 21 March 2002 (2002-03-21) * the whole document * -& .: "Reply dated 17.05.2004 to EP 01982298.0", EP registry, 17 May 2004 (2004-05-17), pages 1-11, XP93120463, Retrieved from the Internet: URL: . [retrieved on 2024-01-17] * chapter 3; page 1 - page 2 * | 1-15 | **TECHNICAL FIELDS SEARCHED (IPC)** |

The present search report has been drawn up for all claims

| Place of search | Date of completion of the search | Examiner |
|---|---|---|
| Munich | 18 January 2024 | Größl, Sylvester |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 23 19 8878

This annex lists the patent family members relating to the patent documents cited in the above-mentioned European search report.
The members are as contained in the European Patent Office EDP file on
The European Patent Office is in no way liable for these particulars which are merely given for the purpose of information.

18-01-2024

| Patent document cited in search report | | Publication date | Patent family member(s) | | Publication date |
|---|---|---|---|---|---|
| CN 107873722 | A | 06-04-2018 | NONE | | |
| CN 106922719 | A | 07-07-2017 | NONE | | |
| CN 103478159 | A | 01-01-2014 | NONE | | |
| EP 3603395 | A1 | 05-02-2020 | CA | 3106592 A1 | 06-02-2020 |
| | | | CO | 2021001140 A2 | 17-02-2021 |
| | | | EP | 3603395 A1 | 05-02-2020 |
| | | | US | 2021267201 A1 | 02-09-2021 |
| | | | WO | 2020025368 A1 | 06-02-2020 |
| EP 2797418 | B1 | 10-05-2017 | AR | 089283 A1 | 13-08-2014 |
| | | | BR | 112014015806 A2 | 13-06-2017 |
| | | | CN | 104010506 A | 27-08-2014 |
| | | | EP | 2797418 A2 | 05-11-2014 |
| | | | ES | 2633898 T3 | 25-09-2017 |
| | | | HR | P20171134 T1 | 06-10-2017 |
| | | | HU | E035994 T2 | 28-06-2018 |
| | | | JP | 2013151476 A | 08-08-2013 |
| | | | LT | 2797418 T | 10-07-2017 |
| | | | MX | 352508 B | 27-11-2017 |
| | | | PL | 2797418 T3 | 31-10-2017 |
| | | | PT | 2797418 T | 19-07-2017 |
| | | | RU | 2014131005 A | 20-02-2016 |
| | | | SI | 2797418 T1 | 31-08-2017 |
| | | | UA | 113974 C2 | 10-04-2017 |
| | | | US | 2015011391 A1 | 08-01-2015 |
| | | | US | 2017202221 A1 | 20-07-2017 |
| | | | WO | 2013100178 A2 | 04-07-2013 |
| EP 2856873 | A1 | 08-04-2015 | EP | 2856873 A1 | 08-04-2015 |
| | | | JP | WO2013180129 A1 | 21-01-2016 |
| | | | MX | 363619 B | 28-03-2019 |
| | | | US | 2015133300 A1 | 14-05-2015 |
| | | | WO | 2013180129 A1 | 05-12-2013 |
| CN 104970029 | A | 14-10-2015 | NONE | | |
| CN 106879608 | A | 23-06-2017 | NONE | | |
| WO 0221922 | A1 | 21-03-2002 | AT | E311747 T1 | 15-12-2005 |
| | | | AU | 1392102 A | 26-03-2002 |
| | | | AU | 2002213921 B2 | 27-04-2006 |
| | | | BR | 0113948 A | 29-07-2003 |
| | | | CA | 2422189 A1 | 21-03-2002 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 23 19 8878

This annex lists the patent family members relating to the patent documents cited in the above-mentioned European search report.
The members are as contained in the European Patent Office EDP file on
The European Patent Office is in no way liable for these particulars which are merely given for the purpose of information.

18-01-2024

| Patent document cited in search report | Publication date | Patent family member(s) | | Publication date |
|---|---|---|---|---|
| | | CN 1458824 A | | 26-11-2003 |
| | | DE 60115694 T2 | | 10-08-2006 |
| | | DK 1330162 T3 | | 03-04-2006 |
| | | EP 1330162 A1 | | 30-07-2003 |
| | | ES 2254514 T3 | | 16-06-2006 |
| | | MX PA03002356 A | | 17-06-2005 |
| | | RU 2304389 C2 | | 20-08-2007 |
| | | US 2004072691 A1 | | 15-04-2004 |
| | | WO 0221922 A1 | | 21-03-2002 |
| | | ZA 200301848 B | | 19-04-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **COLBY S. R.** Calculation of the synergistic and antagonistic responses of herbicide combinations. *Weeds*, 1967, vol. 15, 20-22